# EUROPEAN PATENT APPLICATION

(11) **EP 4 439 443 A1**
(43) Date of publication of application: **02.10.2024**
(21) Application number: 22898266.6
(22) Date of filing: 14.10.2022
(51) Int. Cl.: G06T 1/40, G06T 1/00, G06T 5/50, G06T 7/00

(54) **IMAGE CONVERSION DEVICE, CONTROL METHOD FOR IMAGE CONVERSION DEVICE, CONTROL PROGRAM, AND RECORDING MEDIUM**

(30) Priority: 26.11.2021 JP 2021192463
(71) Applicant: Kyocera Corporation, Kyoto-shi Kyoto 612-8501 (JP)
(72) Inventor: WADA, Naoya, Kyoto-shi, Kyoto 612-8501 (JP); KOBAYASHI, Masaya, Kyoto-shi, Kyoto 612-8501 (JP)
(74) Representative: Viering, Jentschura & Partner mbB Patent- und Rechtsanwälte
(86) International application number: PCT/JP2022/038339
(87) International publication number: WO 2023/095482

(57) **Abstract**

A color tone of a generated image generated by image conversion is controlled. An image conversion device includes: an acquiring unit configured to acquire an input image in a first image style including a target portion of a first target object; a generating unit including (1) a neural network configured to generate, from the input image, a target image in a second image style different from the first image style, and (2) a color tone information controller configured to acquire color tone information indicating a color tone of the target portion in a reference image in the second image style including the target portion of a second target object different from the first target object, and input the color tone information to the neural network; an input controller configured to input the input image and the reference image to the generator; and an output controller configured to control output of the target image generated by the generator.

## Description

### TECHNICAL FIELD

The present disclosure relates to an image conversion device, an image conversion method, and the like enabling color tone control in image conversion between images having different image styles.

### BACKGROUND OF INVENTION

In recent years, a cycle Generative Adversarial Network (GAN), which is one of image conversion techniques, has been attracting attention. The cyclic GAN utilizes the evaluation of cycle-consistency loss, and thus does not require acquisition of a large amount of paired image data (so-called teacher data).

### CITATION LIST

### NON-PATENT LITERATURE

Non-Patent Document 1: J. Zhu et al., "Unpaired image-to-image translation using cycle-consistent adversarial networks." arXiv: 1703, 10593. 2017.

### SUMMARY

An image conversion device according to an aspect of the present disclosure includes: an acquiring unit configured to acquire an input image in a first image style including a target portion of a first target object; a generating unit including (1) a neural network configured to generate, from the input image, a target image in a second image style different from the first image style and (2) a color tone information controller configured to acquire color tone information indicating a color tone of the target portion in a reference image in the second image style including the target portion of a second target object different from the first target object, and input the color tone information to the neural network; an input controller configured to input the input image and the reference image to the generating unit; and an output controller configured to control output of the target image generated by the generating unit.

A control method according to an aspect of the present disclosure is a control method for an image conversion device including a neural network that generates, from an input image in a first image style that includes a target portion of a first target object, a target image in a second image style different from the first image style, the method including: acquiring the input image; inputting to the neural network the input image and color tone information indicating a color tone of the target portion of a reference image including the target portion of a second target object different from the first target object; generating the target image by the neural network; and outputting the target image generated by the neural network.

The image conversion device according to each aspect of the present disclosure may be implemented by a computer. In this case, a control program of the image conversion device causing a computer to implement the image conversion device by causing the computer to operate as each unit (software element) included in the image conversion device and a computer-readable recording medium including the control program that is recorded therein are also included within the scope of the present disclosure.

### BRIEF DESCRIPTION OF THE DRAWINGS

FIG. 1 is a block diagram illustrating an example of a configuration of an image conversion device 1 according to an aspect of the present disclosure.
FIG. 2 is a functional block diagram illustrating an example of a configuration of the image conversion device.
FIG. 3 is a diagram illustrating an example of a network structure of a neural network.
FIG. 4 is a diagram illustrating an example of a network structure of a first generator.
FIG. 5 is a flowchart illustrating an example of processing executed by the image conversion device.
FIG. 6 is a flowchart illustrating an example of training procedure for the neural network.
FIG. 7 is a diagram illustrating a first error and a second error used in the training procedure for the neural network.
FIG. 8 is a diagram illustrating a third error used in the training procedure for the neural network.
FIG. 9 is a diagram illustrating a fourth error and a fifth error used in the training procedure for the neural network.
FIG. 10 is a diagram illustrating an example of a target image generated by the image conversion device.

### DESCRIPTION OF EMBODIMENTS

### First Embodiment

An embodiment of the present disclosure will be described in detail below.

### Overview of image conversion device 1

There has been room for improvement since the color tone of a generated image cannot be easily controlled when cycle GAN is used for image conversion between images in different image styles. An image conversion device 1 according to an aspect of the present disclosure generates a target image in response to input of an input image in a first image style and a reference image in a second image style different from the first style. In this process, the image conversion device 1 generates the target image through image conversion processing for converting the image style of the input image, and controls the color tone of the target image based on the color tone of the reference image.

The input image is an image including a target portion of a first target object, and the reference image is an image including a target portion of a second target object different from the first target object. The first target object and the second target object may be living beings or non-living beings. For example, the input image and the reference image may be captured images of an object such as a machine or an instrument, or may be captured images of a landscape. In this case, the first target object and the second target object may be objects such as machines and instruments, or may be objects such as a mountain, sea, or street that are part of a landscape. In addition, the target portion may be any part or the entirety of the first target object and the second target object.

The target image is an image obtained by changing the image style of the input image in the first image style to the second image style. The shape of the target portion in the target image is controlled based on the shape of the target portion in the input image. On the other hand, the color tone of the target portion in the target image is controlled based on the color tone of the target portion in the reference image.

For example, when generating a target image by changing an image (first image style) of a street in the daytime with strong sunlight to an image (second image style) of the street at night, the image conversion device 1 controls the color tone of the target image based on the color tone of the street in the reference image. As the reference image, an image including a street with a desired color tone may be used. For example, when an image of a street on a cloudy day is used as the reference image, the image conversion device 1 generates an image of the street at night having a color tone of the street on the cloudy day as the target image.

The input image may be a three dimensional image simulating a stereoscopic shape of the target portion in the second target object, and the reference image may be a two dimensional image as a captured image of the first target object.

The reference image may be a partial image obtained by extracting a region of the target portion from an entire image obtained by capturing the entirety of the first target object, and the input image may be an image of the target portion of the second target object. In this case, the image conversion device 1 may generate a composite image by combining the target image with a region corresponding to the target portion of the whole body image.

The first target object and the second target object may be living beings. In this case, the target portion may be any part of the body of a living being (for example, a human being). Thus, the target portion may be, for example, a whole body, a j oint, a skin, a face, an eye, a nose, a mouth, an ear, and/or hair of a human being.

The first target object and the second target object may be living beings with the diseased target portion, and in this case, the disease of the second target object may be more progressed than the disease of the first target object. When the first target object and the second target object are human beings, the "disease" may be a progressive disease involving a change in appearance and/or shape of the target portion. Examples of such diseases include knee osteoarthritis, osteoporosis, and the like.

The first target object and the second target object may be living beings that have undergone an intervention on the target portion, and an elapsed period after the second target object has undergone the intervention may be longer than an elapsed period after the first target object has undergone the intervention. When the first target object and the second target object are human beings, the "intervention" may be medical interventions such as surgery, nutrition guidance, and rehabilitation.

### Configuration of image conversion device 1

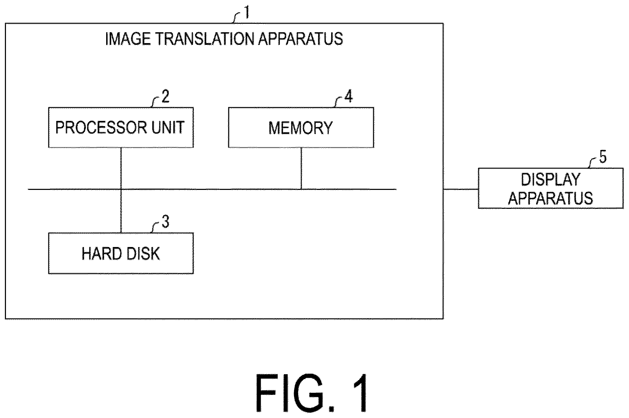

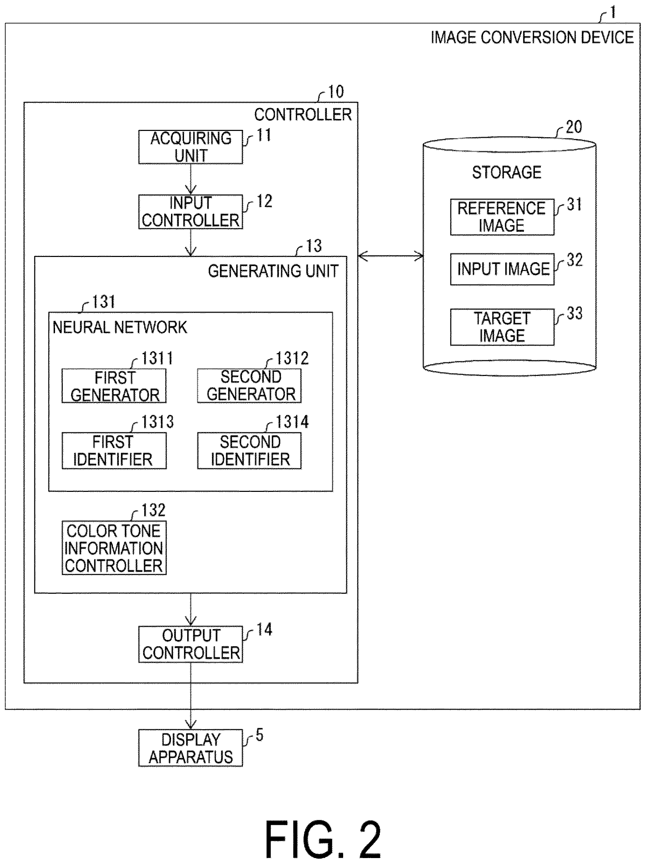

First of all, a configuration of the image conversion device 1 will be described with reference to FIGs. 1 and 2. FIG. 1 is a block diagram illustrating an example of a configuration of the image conversion device 1 according to an aspect of the present disclosure. FIG. 2 is a functional block diagram illustrating an example of a configuration of the image conversion device 1.

The image conversion device 1 is, for example, a computer, and includes a processor unit 2, a hard disk 3, and a memory 4 as illustrated in FIG. 1.

The processor unit 2 reads programs from the hard disk 3 and executes the programs. The processor unit 2 may be, for example, a CPU.

The hard disk 3 stores the programs to be executed by the processor unit 2. The hard disk 3 may store image data to be used by the processor unit 2 to execute the various programs.

The memory 4 stores data and programs used for processing being executed by the processor unit 2. For example, the memory 4 functions as a working memory for storing a program loaded from the hard disk 3 to implement the neural network structure.

A display apparatus 5 may be any display apparatus for displaying images (for example, a reference image and/or an input image) used for processing executed by the processor unit 2 and images (for example, a target image described below) generated by processing executed by the processor unit 2. As illustrated in FIG. 1, the image conversion device 1 may be communicably connected to the display apparatus 5. Alternatively, the image conversion device 1 may include a display that functions as the displayer.

As illustrated in FIG. 2, the image conversion device 1 includes a controller 10 corresponding to the processor unit 2 and the memory 4 illustrated in FIG. 1, and a storage 20 corresponding to the hard disk 3 illustrated in FIG. 1.

The controller 10 includes an acquiring unit 11, an input controller 12, a generating unit 13, and an output controller 14.

### Acquiring unit 11

The acquiring unit 11 acquires the input image in the first image style including the target portion in the first target object. The acquiring unit 11 may further acquire the reference image in the second image style different from the first style, including the target portion in the second target object different from the first target object. As illustrated in FIG. 1, the acquiring unit 11 may acquire the reference image and the input image from a reference image 31 and an input image 32 in the storage 20. Alternatively, the acquiring unit 11 may acquire color tone information indicating the color tone of the target portion in the reference image.

FIG. 1 illustrates an example where the image conversion device 1 stores the reference image 31 including one or a plurality of reference images and the input image 32 including one or a plurality of input images in the storage 20 in advance. However, the image conversion device 1 may acquire the reference image and the input image to be used from the outside each time.

### Input controller 12

The input controller 12 inputs the input image and the reference image to a neural network 131 of the generating unit 13 to be described below. Alternatively, the input controller 12 may input the color tone information indicating the color tone of the target portion in the reference image to the neural network 131, instead of the reference image.

### Generating unit 13

The generating unit 13 includes the neural network 131 and a color tone information controller 132. The generating unit generates a target image as a result of conversion into the second image style with the shape of the target portion included in the input image maintained, and with the color tone of the target portion controlled based on the color tone of the target portion included in the reference image. The reference image may be an image of the same image style as that of the target image generated by the generating unit 13, but this should not be construed in a limiting sense. For example, the reference image may be an image in an image style different from that of the target image generated by the generating unit 13.

### Neural network 131

The neural network 131 may include the following (i) to (iv).
(i) A first generator 1311 that generates a first converted image in the second image style from any input image in the first image style (such as, for example, a first input image described below).
(ii) A second generator 1312 that generates a second converted image in the second image style from any input image in the first image style (such as, for example, a second input image described below).
(iii) A first identifier 1313 capable of identifying an image in the first image style based on the shape and color tone of the target portion.
(iv) A second identifier 1314 capable of identifying an image in the second image style based on the shape and color tone of the target portion.

For the neural network 131 after a training procedure described below, the first converted image is the target image generated from the input image in the first image style, and the second converted image is the target image generated from the input image in the second image style.

The first generator 1311 may be further capable of generating a third converted image in the first image style from the second converted image, and the second generator 1312 may be further capable of generating a fourth converted image in the first image style from the first converted image.

The first identifier 1313 may identify the image in the first image style based on a first color tone error (first color tone loss) and at least one of the group consisting of a first error (so-called cycle-consistency error), a second error (so-called adversarial loss), and a third error (so-called identity error). The first identifier 1313 may be capable of determining the authenticity of any image in the first image style.

Here, the first color tone error is an error between the color tone information of the target portion in a first image and the color tone information of the target portion in the reference image in the second image style.

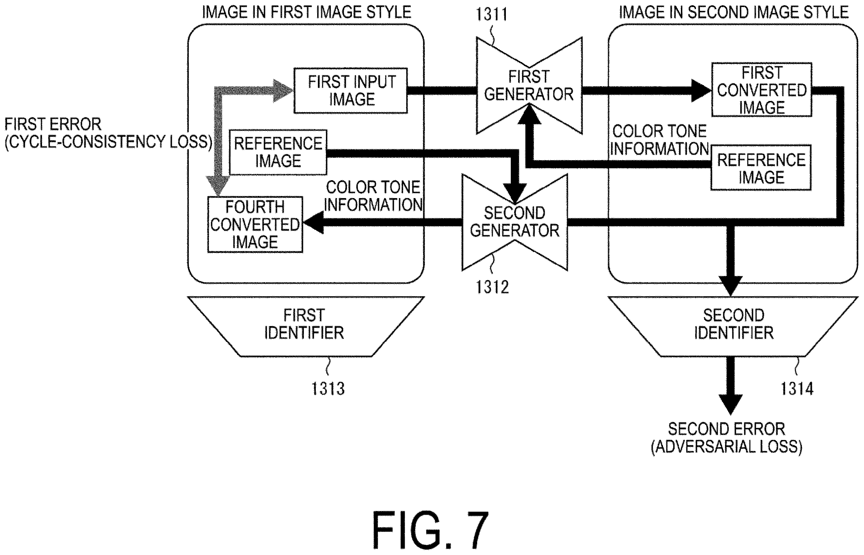

The first error is an error related to the shape of the target portion between the first image and the fourth converted image (see FIG. 7). The second error is an error related to the shape of the target portion between the second converted image and the image in the first image style (see FIG. 7). A sixth error is an error related to the shape of the target portion between the second converted image and a second evaluation image generated when the second converted image is input to the second generator.

The second identifier 1314 may identify the image in the second image style based on a second color tone error (second color tone loss) and at least one of the group consisting of the fourth error (so-called cycle-consistency error), the fifth error (so-called adversarial loss), and the sixth error (so-called identity error). The second identifier 1314 may be capable of determining the authenticity of any image in the second image style.

Here, the second color tone error is an error between the color tone information of the target portion in a second image and the color tone information of the target portion in the reference image in the second image style.

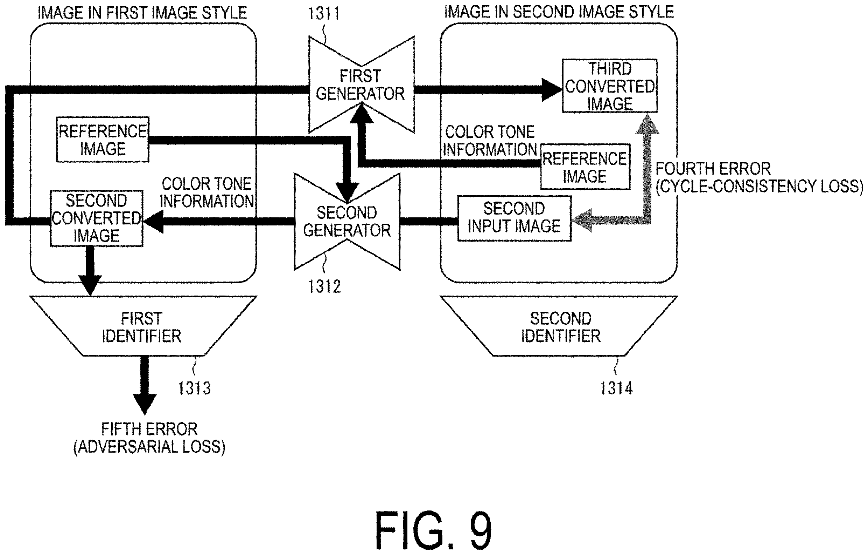

The fourth error is an error related to the shape of the target portion between the second image and the third converted image (see FIG. 9). The fifth error is an error related to the shape of the target portion between the first converted image and the image in the second image style (see FIG. 9). The third error is an error related to the shape of the target portion between the first converted image and a first evaluation image generated when the first converted image is input to the first generator.

The neural network 131 may be trained to minimize a first integrated error obtained by integrating the first color tone error, the first error, the second error, and the third error, and a second integrated error obtained by integrating the second color tone error, the fourth error, the fifth error, and the sixth error. A specific example of the training for the neural network 131 will be described below.

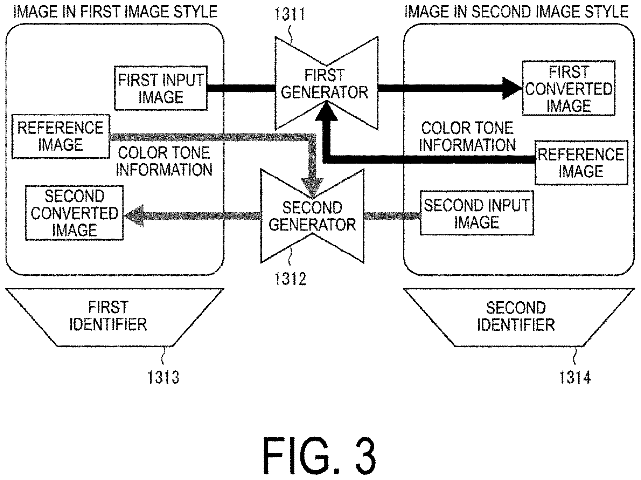

A schematic configuration of the neural network 131 will be described with reference to FIG. 3. FIG. 3 is a diagram illustrating an example of a network structure of the neural network 131.

As illustrated in FIG. 3, the neural network 131 may include the first generator 1311, the second generator 1312, the first identifier 1313, and the second identifier 1314 as described above.

The first generator 1311 generates the first converted image which is a generated image in the second image style from the first input image in the first image style. The second generator 1312 generates the second converted image which is a generated image in the first image style from the second input image in the second image style.

In the processing of converting the image style of the first input image into the second image style, the input controller 12 inputs the first input image to the first generator 1311. The input controller 12 inputs the color tone information indicating the color tone of the target portion in the reference image which is an image in the second image style, to the first generator 1311. The color tone information of the reference image is acquired by the color tone information controller 132 described below.

In the processing of converting the image style of the second input image into the first image style, the input controller 12 inputs the second input image to the second generator 1312. The input controller 12 inputs the color tone information indicating the color tone of the target portion in the reference image which is an image in the first image style, to the second generator 1312.

FIG. 3 illustrates an example in which the color tone information of the reference image in the second image style is input to the first generator 1311 and the color tone information of the reference image in the first image style is input to the second generator 1312, but the present invention is not limited to this. Specifically, the color tone information of the reference image in any image style may be input to the first generator 1311 and/or the second generator 1312. Thus, the neural network 131 can control the color tone of the image after the image style conversion in accordance with the color tone of any reference image.

### Color tone information controller 132

The color tone information controller 132 acquires the color tone information indicating the color tone of the target portion in the reference image. The color tone information may be a color distribution histogram of the reference image. Alternatively, the color tone information may be a histogram related to luminance (or brightness) of each image.

When a configuration in which the acquiring unit 11 acquires the color tone information indicating the color tone of the target portion in the reference image is adopted, the color tone information controller 132 is not an essential configuration in the image conversion device 1.

The first generator 1311 is a network adopting a structure for receiving input of the color tone information indicating the color tone of the reference image, in an intermediate layer of an encoder-decoder structure. The second generator 1312 is a network adopting a structure for receiving input of the color tone information indicating the color tone of the input image, in the intermediate layer of the encoder-decoder structure.

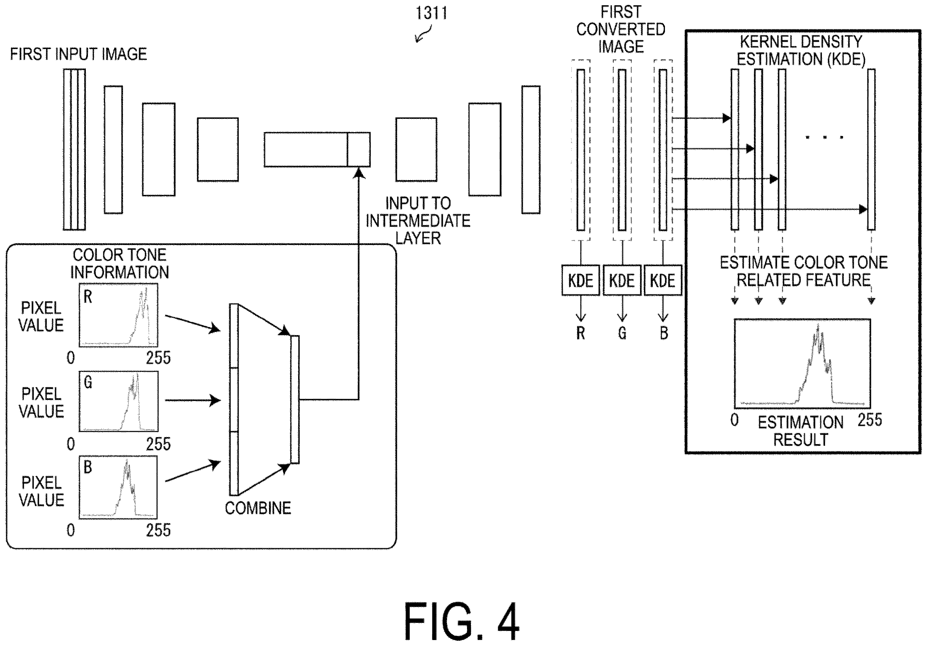

Details of the network structure of the first generator 1311 will be described with reference to FIG. 4. FIG. 4 is a diagram illustrating an example of a network structure of the first generator 1311. Since the network structure of the second generator 1312 is similar to the network structure of the first generator 1311, a detailed description of the second generator 1312 will be omitted in the description below.

FIG. 4 illustrates an example in which the input image is an RGB image (i.e., a color image) and a generated image is output through the encoder-decoder structure. Further, in the example illustrated in FIG. 4, the color tone information is a color distribution histogram. The first generator 1311 illustrated in FIG. 4 adopts a structure in which the color tone information obtained from the reference image is combined with the input to the intermediate layer.

A relationship obtained from a known density estimation method (for example, kernel density estimation) may be applied to each of the RGB channels of the generated image output from the first generator 1311. In FIG. 4, processing using the kernel density estimation is denoted by "KDE". This makes it possible to obtain a differentiable generated image color distribution histogram.

### Output controller 14

Referring back to FIG. 2, the output controller 14 controls output of the target image generated by the generating unit. For example, the output controller 14 may store the generated target image as a target image 33 in the storage 20. Alternatively, as illustrated in FIG. 2, when the image conversion device 1 is communicably connected to the display apparatus 5, the output controller 14 may cause the display apparatus 5 to display the target image.

### Processing executed by image conversion device 1

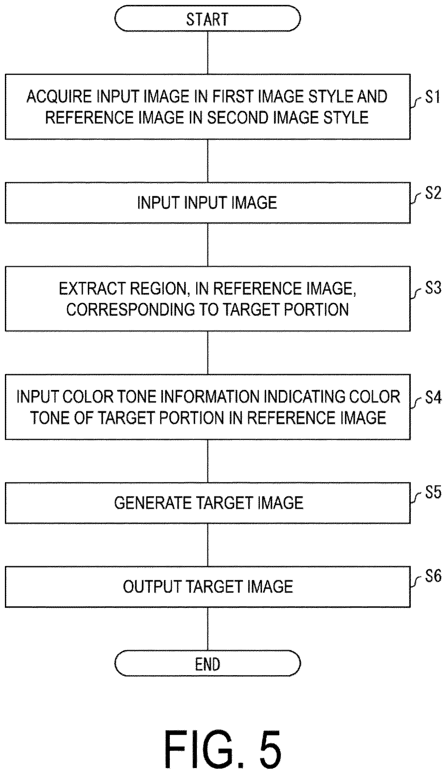

Next, processing executed by the image conversion device 1 will be described with reference to FIG. 5. FIG. 5 is a flowchart illustrating an example of the processing executed by the image conversion device 1.

For simplification of description, FIG. 5 illustrates only an example where the image conversion device 1 generates a target image in the second image style from the input image in the first image style. Conversely, the image conversion device 1 can generate the target image in the first image style from the input image in the second image style.

FIG. 5 exemplary illustrates the processing executed by the image conversion device 1 including the color tone information controller 132. However, as described above, the acquiring unit 11 may acquire the color tone information indicating the color tone of the target portion in the reference image, meaning that the color tone information controller 132 is not an essential configuration in the image conversion device 1.

In step S1, the acquiring unit 11 acquires an input image in the first image style (acquiring). In step S1, the acquiring unit 11 acquires a reference image in the second image style.

Next, the input controller 12 inputs the input image to the neural network 131 (step S2: inputting). When the reference image includes a region that does not correspond to the target portion, the input controller 12 may extract a region corresponding to the target portion in the reference image (step S3).

Next, the color tone information controller 132 acquires color tone information indicating the color tone of the target portion in the reference image. Then, the input controller 12 inputs the color tone information of the reference image to the neural network 131 (step S4: inputting).

After step S4, the generating unit 13 generates the target image (step S5: generating). The target image is an image obtained by changing the image style of the input image to the second image style. The shape of the target portion in the target image is controlled based on the shape of the target portion in the input image, and the color tone of the target portion in the target image is controlled based on the color tone of the target portion in the reference image.

The output controller 14 outputs the target image to the display apparatus 5 or the like (step S6: output step).

When the target image is generated in this manner, the color tone of the target portion in the target image can be controlled based on the color tone of the target portion in the reference image.

### Example of situation where target image is used

For example, progressive diseases such as knee osteoarthritis or osteoporosis involve no subjective symptoms in their initial stages. However, for these diseases, it is important to perform appropriate intervention from a stage without clear subjective symptoms. Still, some patients suffering from knee osteoarthritis or osteoporosis do not take future changes (deformities) in their body seriously, and are reluctant to go through early interventions.

In known cases where progression of a progressive disease such as knee osteoarthritis or osteoporosis is explained to a patient, a photograph as a captured image of an appearance of another patient whose symptom has progressed or his or her medical image such as an X-ray image or an MRI image has been shown as an example. However, since such a medical image is a captured image of the body of another person and is not a captured image of the body of the patient him or herself, the effect of such an image for making the patient take the future change in his or her body seriously is not so high.

The image conversion device 1 according to an aspect of the present disclosure generates, for example, from an input image including a target portion of another patient whose symptom has progressed, a target image with the shape of the target portion maintained. The color tone of the target portion in the generated target image is controlled based on the color tone of the target portion in the reference image which is a captured image of the patient. Thus, the generated target image is an image that virtually represents concern about future changes in the patient's own body. Therefore, by showing the target image to the patient, an effect of making the patient to correctly understand the future impact of the progress of his or her disease can be expected. Therefore, by using the target image generated by the image conversion device 1, the patient can be effectively prompted to cooperate with the early intervention.

### Training for generating unit 13

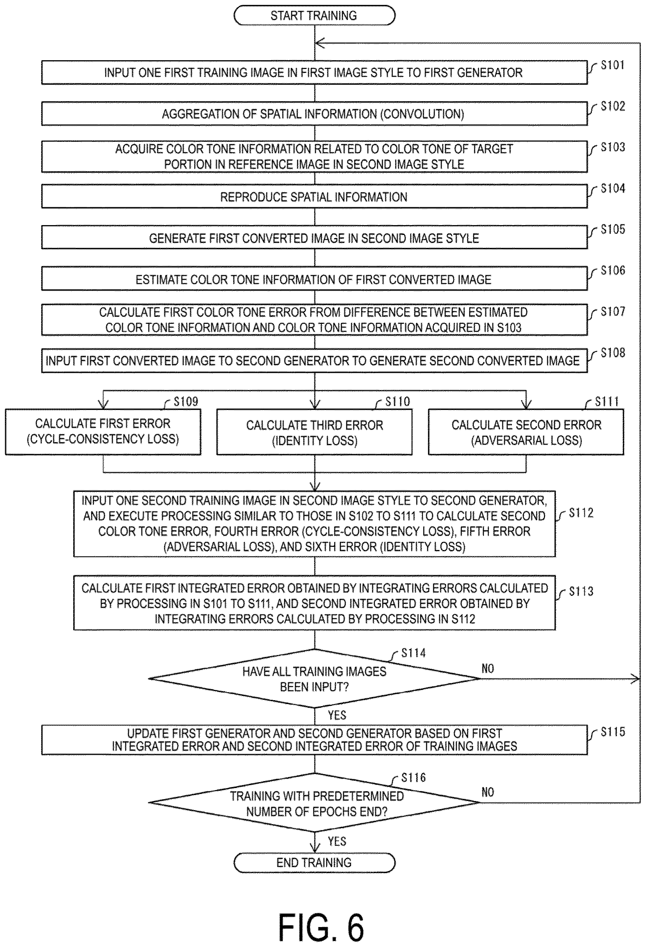

Next, a configuration of the generating unit 13 will be described with reference to FIG. 6. FIG. 6 is a flowchart illustrating an example of a training procedure for the generating unit 13.

The neural network 131 is a neural network (generative model) that extracts a feature of an input image and generates a new image having the extracted feature. A training method based on a known deep learning algorithm such as generative adversarial networks (GAN) may be applied to the training for the neural network 131.

The training processing for the neural network 131 may be executed using a computer different from the image conversion device 1. In this case, by installing the trained neural network 131 and any predetermined program in an any computer, the computer can function as the image conversion device 1.

### Training procedure for neural network 131

Next, the training procedure for the neural network 131 will be described using FIG. 6, and with reference to FIGs. 7 to 9. FIG. 6 is a flowchart illustrating an example of the training procedure for the neural network 131. FIGs. 7 to 9 are diagrams illustrating the first error to the fifth error used in the training procedure for the neural network 131.

A case where the image conversion device 1 executes the training procedure will be described below as an example, but the present invention is not limited thereto. For example, the training procedure for the neural network 131 can be executed in an external computer different from the image conversion device 1. In this case, by installing the trained neural network 131 in any computer, the computer can function as the image conversion device 1.

The input controller 12 inputs one first training image in the first image style to the first generator 1311 of the neural network 131 (step S101). The first generator 1311 performs aggregation of spatial information (convolution) in the input first training image (step S102).

On the other hand, the color tone information controller 132 acquires color tone information related to the color tone of the target portion in the reference image in the second image style (step S103). The acquired color tone information is input to the intermediate layer of the neural network 131.

The first generator 1311 reproduces the spatial information extracted from the first training image (step S104) and generates the first converted image in the second image style (step S105).

The color tone information controller 132 estimates the color tone information related to the color tone of the target portion in the first converted image (step S106). The color tone information controller 132 calculates the first color tone error from a difference between the estimated color tone information and the color tone information acquired in the S103 (step S107).

Next, the input controller 12 inputs the first converted image to the second generator 1312 of the neural network 131 to generate the second converted image (step S108). The second converted image is an image in the first image style.

The first identifier 1313 calculates the first error (cycle-consistency loss) related to the shapes of the first input image and a fourth input image (step S109). The second identifier 1314 calculates the second error (adversarial loss) related to the shape of the target portion between the first converted image and the image in the first image style (step S111). Here, the first error and the second error correspond to the case where the first input image is the first training image in FIG. 7.

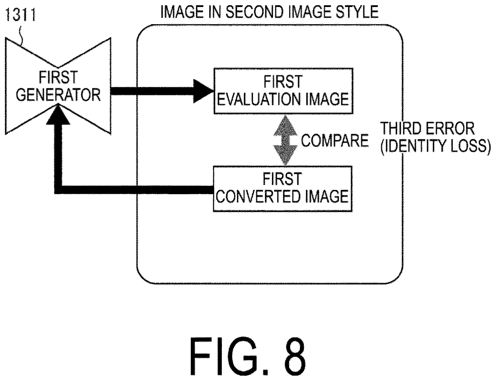

As illustrated in FIG. 8, the second identifier 1314 calculates the third error (identity loss) regarding the shape of the target portion between the first evaluation image generated when the first converted image is input to the first generator 1311 and the first converted image (step S110).

The input controller 12 inputs one second training image in the second image style to the second generator 1312 of the neural network 131. Then, the generating unit 13 performs operations similar to those in steps S102 to S111 described above to calculate the second color tone error, the fourth error, the fifth error, and the sixth error (step S112). In this case, the first identifier 1313 calculates, as the third error (identity loss), an error related to the shape of the target portion between the second converted image and the second evaluation image generated when the second converted image is input to the second generator 1312.

The generating unit 13 calculates the first integrated error obtained by integrating the errors calculated by the processing in steps S102 to S111 and the second integrated errors obtained by integrating the errors calculated by the processing in S112 (step S113).

When not all the training images have been input yet (NO in S114), the processing returns to S101, and the configuration of steps S101 to S113 is repeated. On the other hand, when all the training images have been input (YES in S114), the processing proceeds to step S115, and the generating unit 13 updates the first generator 1311 and the second generator 1312 based on the first integrated error and the second integrated error of the training images.

In the training procedure, the generating unit 13 makes the neural network 131 repeatedly learn a training image dataset including the first training image. The number of times that the generating unit 13 makes the neural network 131 learn the training image dataset may be referred to as "the number of epochs". In the training procedure, the generating unit 13 updates the first generator 1311 and the second generator 1312 each time one epoch ends. When the training with a predetermined number of epochs has not been completed yet, the generating unit 13 returns to S101 and repeats the configuration in steps S101 to S115. On the other hand, when the training with the predetermined number of epochs has been completed (YES in S116), the generating unit 13 ends the training procedure for the neural network 131.

In the example illustrated in FIG. 6, the training procedure is terminated when the training with the predetermined number of epochs is completed. However, the generating unit 13 may end the training procedure before the training with the predetermined number of epochs is completed. For example, when the values of the first integrated error and the second integrated error cease to make a large change, the overtraining of the neural network 131 may be occurring, and thus the generating unit 13 may stop the training procedure. The generating unit 13 may be configured to determine whether to end the training procedure early based on the magnitude of the change in the values of the first integrated error and the second integrated error.

### Example

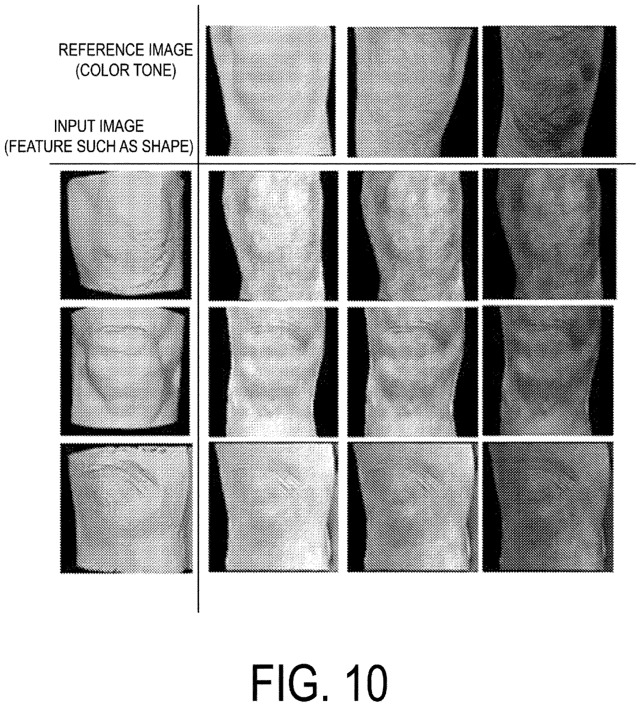

FIG. 10 illustrates target images obtained by various combinations of the input image and the reference image. The left-most column represents three input images in the first image style and the top row represents three reference images in the second image style. As illustrated in FIG. 10, each of the target images generated by the image conversion device 1 was generated as an image having a color distribution similar to that of a knee joint (target portion) in the corresponding reference image while reproducing the three dimensional shape of the knee joint in the input image. Thus, the color tone of the target image generated by the image conversion device 1 is controlled based on the color tone of the reference image.

The image conversion device 1 does not need a pair of images. The pair of images are, for example, images of the same object captured under two imaging modes and are in different image styles, and are two images that are known to correspond to each other. For example, in related art, converting the image style of an image of a knee joint requires a pair of images that are an image of the knee joint of the patient captured with an optical camera and an MRI image of the knee of the same patient. On the other hand, in the image style conversion processing by the image conversion device 1, a converted image obtained by converting the image style of the input image is generated, and the original image style is restored from the generated converted image for comparison with the input image, meaning that no pair of images corresponding to each other are required.

Also in image conversion processing using the cycle GAN, the pair of images are not required as in the image conversion device 1. However, since the color tone information of the reference image is not used in the image conversion processing using the cycle GAN, the color tone of the target image is generated from the color tone distribution of the training image used for the training. Therefore, with the image conversion processing using the cycle GAN, the color tone of the target image cannot be controlled to be a specific color tone. Meanwhile, it was confirmed that the image conversion device 1 can generate the target image in which the color tone of the target portion in the reference image is reproduced while maintaining the shape of the target portion in the input image.

### Example of Software Implementation

Functions of the image conversion device 1 (hereinafter, referred to as "apparatus") can be implemented by a program for causing a computer to function as the apparatus and for causing the computer to function as each control block (particularly, each unit included in the controller 10) of the apparatus.

In this case, the apparatus includes a computer including at least one control device (e.g., processor) and at least one storage device (e.g., memory) as hardware for executing the program. By executing the program by the control device and the storage device, the functions described in the embodiments are implemented.

The program may be recorded on one or more computer-readable non-transitory recording media. The recording media may or may not be included in the device. In the latter case, the program may be supplied to the apparatus via any wired or wireless transmission medium.

Some or all of the functions of the control blocks can be implemented by logic circuits. For example, an integrated circuit in which logic circuits functioning as the control blocks are formed is also included in the scope of the present disclosure. In addition to this, for example, a quantum computer can implement the functions of the control blocks.

In the present disclosure, the invention has been described above based on the drawings and examples. However, the invention according to the present disclosure is not limited to embodiments described above. That is, the embodiments of the invention according to the present disclosure can be modified in various ways within the scope illustrated in the present disclosure, and embodiments obtained by appropriately combining the technical means disclosed in different embodiments are also included in the technical scope of the invention according to the present disclosure. In other words, note that a person skilled in the art can easily make various variations or modifications based on the present disclosure. Note that these variations or modifications are included within the scope of the present disclosure.

### REFERENCE SIGNS

1 Image conversion device
5 Display apparatus
11 Acquiring unit
12 Input controller
13: Generating unit
14 Output controller
20 Storage
131 Neural network
132 Color tone information controller
1311 First generator
1312 Second generator
1313 First identifier
1314 Second identifier
S1 Acquiring
S2, S4 Inputting
S5 Generating
S6 Outputting

## Claims

1. An image conversion device comprising:
an acquiring unit configured to acquire an input image in a first image style comprising a target portion of a first target object;
a generating unit comprising
(1) a neural network configured to generate, from the input image, a target image in a second image style different from the first image style, and
(2) a color tone information controller configured to acquire color tone information indicating a color tone of the target portion in a reference image in the second image style comprising the target portion of a second target object different from the first target object, and input the color tone information to the neural network;
an input controller configured to input the input image and the reference image to the generating unit; and
an output controller configured to control output of the target image generated by the generating unit.

2. The image conversion device according to claim 1, wherein
the neural network comprises:
a first generator configured to generate a first converted image in the second image style from a first input image in the first image style;
a second generator configured to generate a second converted image in the first image style from a second input image in the second image style;
a first identifier configured to be capable of identifying an image in the first image style based on a shape and a color tone of the target portion; and
a second identifier configured to be capable of identifying an image in the second image style based on the shape and the color tone of the target portion,
the first generator is further capable of generating a third converted image in the first image style from the second converted image,
the second generator is further capable of generating a fourth converted image in the first image style from the first converted image,
the first identifier identifies the image in the first image style based on
a first color tone error between the color tone information of the target portion in the first input image and the color tone information of the target portion in the reference image in the second image style, and
at least one of the group consisting of
(1) a first error related to a shape of the target portion between the first input image and the fourth converted image,
(2) a second error related to the shape of the target portion between the second converted image and the image in the first image style, and
(3) a sixth error related to the shape of the target portion between a second evaluation image generated when the second converted image is input to the second generator and the second converted image, and
the second identifier identifies the image in the first image style based on
a second color tone error between the color tone information of the target portion in the second input image and the color tone information of the target portion in the reference image in the first image style, and
at least one of the group consisting of
(1) a fourth error related to the shape of the target portion between the second input image and the third converted image,
(2) a fifth error related to the shape of the target portion between the first converted image and the image in the second image style; and
(3) a third error related to the shape of the target portion between a first evaluation image generated when the first converted image is input to the first generator and the first converted image.

3. The image conversion device according to claim 2, wherein the neural network is trained to minimize a first integrated error obtained by integrating the first color tone error, the first error, the second error, and the third error, and a second integrated error obtained by integrating the second color tone error, the fourth error, the fifth error, and the sixth error.

4. The image conversion device according to any one of claims 1 to 3, wherein
the input image is a three dimensional image simulating a stereoscopic shape of the target portion of the second target object, and
the reference image is a two dimensional image that is a captured image of the first target object.

5. The image conversion device according to any one of claims 1 to 4, wherein
the reference image is a partial image obtained by extracting a region of the target portion from an entire image obtained by capturing entirety of the first target object,
the input image is an image of the target portion of the second target object, and the generating unit further generates a composite image by combining the target image with the region of the entire image corresponding to the target portion.

6. The image conversion device according to any one of claims 1 to 5, wherein
the first target object and the second target object are living beings with a disease in the target portion, and
the disease is more progressed in the second target object than in the first target obj ect.

7. The image conversion device according to any one of claims 1 to 5, wherein
the first target object and the second target object are living beings that have undergone an intervention on the target portion, and
an elapsed period after the second target object has undergone the medical intervention is longer than an elapsed period after the first target object has undergone the intervention.

8. The image conversion device according to any one of claims 1 to 7, wherein
the first target object and the second target object are living beings, and
the target portion is entire body, joint, skin, face, eye, nose, mouth, ear, and/or hair.

9. A control method for an image conversion device comprising a neural network that generates, from an input image in a first image style comprising a target portion of a first target object, a target image in a second image style different from the first image style, the method comprising:
acquiring the input image;
inputting to the neural network, the input image and color tone information indicating a color tone of the target portion of a reference image comprising the target portion of a second target object different from the first target object;
generating the target image by the neural network; and
outputting the target image generated by the neural network.

10. A control program for causing a computer to operate as the image conversion device described in any one of claims 1 to 8, the control program causing the computer to operate as the acquiring unit, the generating unit, the color tone information controller, the input controller, and the output controller.

11. A computer-readable recording medium comprising the control program described in claim 10 that is recorded therein.
